# FASCICULE DE BREVET EUROPEEN

(11) **EP 3 497 009 B1**
(45) Date de publication et mention de la délivrance du brevet: **17.06.2020**
(21) Numéro de dépôt: 17748549.7
(22) Date de dépôt: 19.07.2017
(51) Int. Cl.: B63C 13/00, B66C 1/18, B64D 1/22

(54) **DISPOSITIF DE TRANSPORT A L'ELINGUE D'UN BATEAU PNEUMATIQUE EN CONFIGURATION OPERATIONNELLE SOUS HELICOPTERE, ET ENSEMBLE LE COMPORTANT**
VORRICHTUNG ZUM TRANSPORT EINES SCHLAUCHBOOTES IN BETRIEBSKONFIGURATION IN EINER SCHLINGE UNTER EINEM HUBSCHRAUBER UND ANORDNUNG DAMIT
DEVICE FOR TRANSPORTING AN INFLATABLE BOAT IN OPERATIONAL CONFIGURATION IN A SLING BENEATH A HELICOPTER, AND ASSEMBLY COMPRISING SAME

(30) Priorité: 11.08.2016 FR 1657699
(43) Date de publication de la demande: 19.06.2019
(73) Titulaire: Zodiac Milpro International, 75009 Paris (FR)
(72) Inventeur: CASSANAS, Marc, 75009 Paris (FR); MARION, Bruno, 75009 Paris (FR); DERLET, Yann, 75009 Paris (FR); LACOSTE, Guillaume, 75009 Paris (FR)
(74) Mandataire: Plasseraud IP
(86) Numéro de dépôt international: PCT/FR2017/051968
(87) Numéro de publication internationale: WO 2018/029406

(56) Documents cités:
- EP-A1- 2 218 671
- GB-A- 492 127
- GB-A- 2 019 808
- US-A- 5 492 383
- US-A- 5 791 281

## Description

La présente invention concerne un dispositif de transport à l'élingue d'un bateau pneumatique en configuration opérationnelle sous hélicoptère, le bateau pneumatique étant du type général connu comprenant deux flotteurs latéraux, dont chacun comprend au moins un boudin gonflable, et qui sont séparés l'un de l'autre, en partie arrière des flotteurs latéraux, au niveau de la poupe du bateau, par un tableau arrière rigide, apte à supporter au moins un moteur de propulsion, les deux flotteurs se rapprochant l'un de l'autre vers l'avant, en direction de l'axe central longitudinal du bateau, au niveau de la proue du bateau, qui comprend également une quille reliant les parties inférieures des deux flotteurs latéraux et un fond s'étendant entre les deux flotteurs latéraux.

US 5 791 281 A décrit un exemple de dispositif de transport d'un bateau pneumatique avec élingues souples. Par configuration opérationnelle, il faut comprendre que le bateau pneumatique est gonflé et totalement équipé pour une intervention en milieu marin, à savoir une dépose et/ou une récupération en mer, avec un intérêt particulier à la récupération en mer, au moins un moteur de propulsion étant de préférence à poste sur le tableau arrière, ou à tout le moins stocké dans le bateau, au moins un réservoir de carburant étant embarqué sur le fond du bateau, si le moteur est à combustion interne, ou des batteries électriques étant embarquées si le moteur est électrique, divers matériels tels que des pagaies, sacs étanches avec lot de bord, des bouteilles d'air comprimé ainsi qu'un ensemble d'accessoires de gestion de la quille, si cette dernière est au moins en partie gonflable, étant également embarqués, avec les matériels de passagers, tandis que ces passagers ainsi que l'équipage d'au moins une personne seront transportés dans l'hélicoptère et rejoindront le bateau après sa mise à l'eau, et, quitteront le bateau en étant treuillés dans l'hélicoptère avant le levage du bateau hors de l'eau par l'hélicoptère, en vue d'une intervention rapide, par exemple pour une opération de sauvetage ou secours. A titre d'exemple, pour un poids à vide du bateau de 160 kg, le poids maximum du bateau en configuration opérationnelle peut atteindre 680 kg.

Pour pouvoir effectuer les interventions rapides du type mentionné ci-dessus, le dispositif de transport sous hélicoptère d'embarcation gonflable/pliable selon l'invention doit permettre à la fois le déploiement en mer, ou éventuellement sur terre, ce qui suppose une approche par transport du bateau à l'élingue sous un hélicoptère, puis posé sur l'eau, ou sur terre, et ensuite libéré de sa liaison à l'hélicoptère, mais également la récupération en mer, ce qui suppose de pouvoir remettre en position le système d'élingage alors que le bateau est sur l'eau, et de rétablir la liaison du bateau flottant sur l'eau avec un hélicoptère, puis le levage du bateau par l'hélicoptère et son évacuation rapide.

Pour permettre ce type d'intervention, il a déjà été proposé un système encombrant et coûteux, essentiellement constitué d'une plateforme métallique rigide suspendue sous hélicoptère et sur laquelle le bateau est roulé avec un système de gonflage automatique. L'ensemble du bateau et de la plateforme étant posé sur l'eau, de sorte que le bateau peut se dégager de la plateforme qui est ensuite levée et emportée par l'hélicoptère. Un autre système connu comporte un harnais, qui est très spécifique à un type d'hélicoptère et avec lequel le bateau est gonflé plaqué sous l'hélicoptère. Mais une récupération opérationnelle n'est pas envisagée avec ces systèmes connus, à plateforme ou à harnais.

En plus d'être encombrants et coûteux, de tels systèmes sont incompatibles avec toutes les missions complètes qui peuvent être dévolues à un bateau pneumatique, son équipage et ses passagers, comme indiqué ci-dessus.

Le problème à la base de l'invention est de proposer un dispositif qui permet le transport et la mise à l'eau, ainsi que la récupération sur l'eau d'un bateau pneumatique en configuration opérationnelle à l'élingue sous hélicoptère, et qui remédie aux inconvénients précités des systèmes de l'état de la technique, en étant de plus compatible avec tout type d'hélicoptère.

A l'effet de remédier aux inconvénients présentés par les dispositifs connus de transport d'un bateau pneumatique en configuration opérationnelle sous hélicoptère, l'invention propose un dispositif de transport comprenant une élingue à quatre brins souples de support, dont une paire de brins dont chacun est apte à être accroché par une extrémité dite "inférieure" à l'un respectivement de deux points de levage, et dont une extrémité dite "supérieure" de chacun desdits brins est reliée à au moins un organe d'accrochage, apte à coopérer avec un crochet suspendu sous un hélicoptère, et deux brins souples de support, formant chacun une boucle apte à passer autour des contours externes et inférieurs latéraux et sous la quille du bateau, et dont chacune des deux extrémités est attachée audit au moins un organe d'accrochage, l'un des deux brins en boucle dit "avant" étant apte à entourer le bateau au niveau de la proue de ce dernier, et qui se caractérise en ce que l'autre brin en boucle dit "médian", est apte à entourer le bateau au niveau de la partie centrale du bateau, et en ce que lesdits brins aptes à être reliés aux deux points de levage sont des brins arrière aptes chacun à être accroché à un point de levage ménagé dans l'une respectivement des deux parties d'extrémité latérales du tableau arrière, le dispositif comprenant de plus un brin inférieur frontal, qui relie la boucle du brin avant à l'avant du bateau, et est apte à empêcher le rapprochement dudit brin avant vers le brin médian, ledit brin inférieur frontal étant une sangle plate de nez, dont une extrémité dite "avant" est apte à être fixée de manière détachable à un point d'attache sur le nez du bateau, et dont l'autre extrémité dite "arrière" est solidaire du milieu du brin avant, et vient se positionner sensiblement au niveau de l'arête de la quille en position d'utilisation du dispositif.

Ce dispositif de transport a pour avantage que ses éléments constitutifs essentiels sont souples, et peuvent donc être pliés et roulés dans un sac, et que l'ensemble du dispositif est alors compact, et peut être conservé lors de la mission, dans le bateau, et ainsi être remis aisément en place pour la phase de levage et d'évacuation par hélicoptère.

Un autre avantage qui découle de la nature souple des composants essentiels de ce dispositif est que ce dernier peut s'adapter parfaitement à la forme et à la conception d'un bateau pneumatique gonflable et/ou pliable, en utilisant des points de levage existants au niveau du tableau arrière, et en assurant une excellente répartition des efforts sur la partie gonflée du bateau. L'élingue à quatre brins caractéristique de la présente invention permet d'ajuster les positions des brins en fonction de la taille de l'embarcation, et de préférence également de les maintenir en position par des moyens limitant l'écartement des brins de l'élingue les uns par rapport aux autres. De plus, un tel dispositif d'élingue à quatre brins peut être dimensionné et réalisé en conformité avec les standards existants, civils et militaires, pour ce type de matériel.

Avantageusement, à cet effet, le dispositif de transport selon l'invention présente également l'une au moins des caractéristiques suivantes :
- les brins "médian" et "avant" sont chacun une sangle large, ce qui permet de répartir les efforts de levage du bateau d'une manière appropriée à l'obtention de pressions suffisamment limitées pour ne pas entraîner de pliage et d'endommagement des boudins gonflés, notamment ;
- le brin "médian" est avantageusement de longueur ajustable alors que le brin avant et les deux brins arrière sont de longueur fixe, ces longueurs fixes étant choisies pour donner une légère assiette positive au bateau, c'est-à-dire que le bateau est légèrement cambré ;
- le dispositif comprend de plus des liens souples anti-écartement entre les brins de support avant, médian et arrière, de chaque côté du bateau, et de préférence, les liens souples anti-écartement comprennent, de chaque côté du bateau, un lien arrière, reliant le brin arrière du côté considéré au brin médian, et un lien avant, reliant le brin médian au brin avant ; et de préférence les longueurs réglables de ces liens souples anti-écartement sont réglées après que les écartements entre les brins ont été définis, pour chaque embarcation, afin que les masses reprises par chaque brin soient équivalentes ;
- l'organe d'accrochage est un anneau rigide supérieur, par exemple métallique, apte à être accroché au crochet d'une installation de treuillage d'un hélicoptère ;
- le dispositif comprend également au moins un lien détachable de positionnement, comprenant un crochet ou mousqueton et un élastique de rappel, dont une extrémité est solidaire d'une partie du brin avant ou médian venant à proximité et au-dessus d'un flotteur latéral du bateau, en position d'utilisation, de sorte que le lien de positionnement est apte à relier, de manière détachable, ledit brin avant ou médian à un anneau de retenue sur ledit flotteur du bateau ; et
- le dispositif comprend de plus au moins deux liens de positionnement détachables, aptes à relier chacun le brin médian ou avant, dont il est solidaire par une extrémité, à l'un respectivement de deux anneaux de retenue sur un flotteur latéral du bateau, dont l'un est vers l'avant et l'autre vers l'arrière du bateau par rapport audit brin médian ou avant, chacun des deux liens de positionnement comportant un crochet ou mousqueton et un élastique de rappel.

Ainsi, les brins avant et médian peuvent chacun être maintenus, et éventuellement rappelés, dans leur position la plus appropriée en fonction des dimensions du bateau, et de tels liens détachables de positionnement permettent de garantir un positionnement approprié de ces brins avant et médian.

L'invention a aussi pour objet un ensemble comprenant un bateau pneumatique du type défini ci-dessus, et un dispositif de transport à l'élingue dudit bateau pneumatique en condition opérationnelle sous hélicoptère, le dispositif de transport à l'élingue étant tel que défini ci-dessus.

D'autres avantages et caractéristiques de l'invention découleront de la description donnée ci-dessous, à titre non limitatif, d'un exemple de réalisation décrit en référence aux dessins annexés sur lesquels :
- la figure 1 est une vue schématique en perspective de l'avant et de côté d'un bateau pneumatique gonflé et équipé d'un dispositif de transport selon l'invention, représenté en position de transport sous hélicoptère, en étant suspendu à un crochet (non représenté) d'une installation, également non représentée, de treuillage d'un hélicoptère,
- la figure 2 est une vue également en perspective, mais de l'arrière, de côté et de dessus, du bateau représenté suspendu sur la figure 1, et
- la figure 3 est une vue agrandie d'un détail de la figure 1.

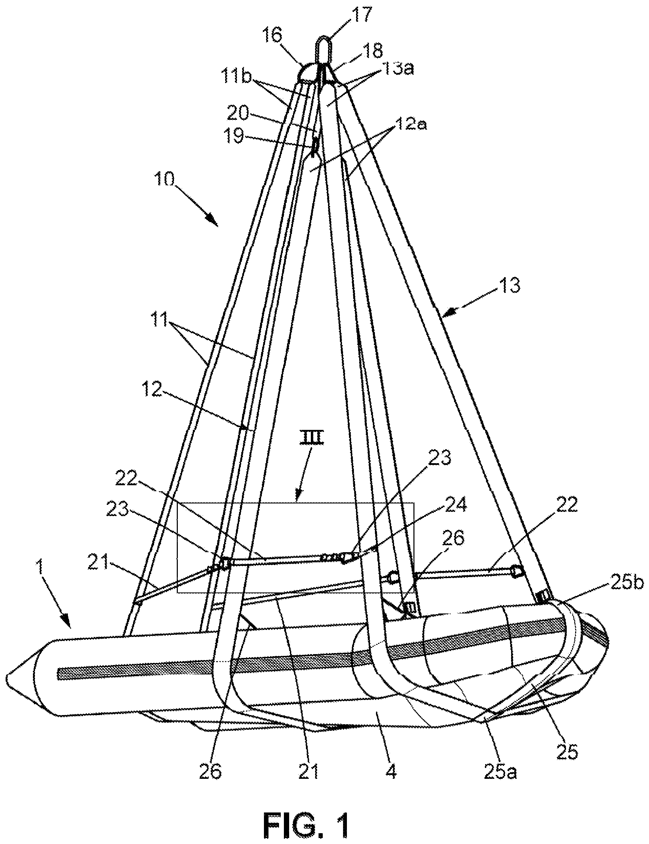

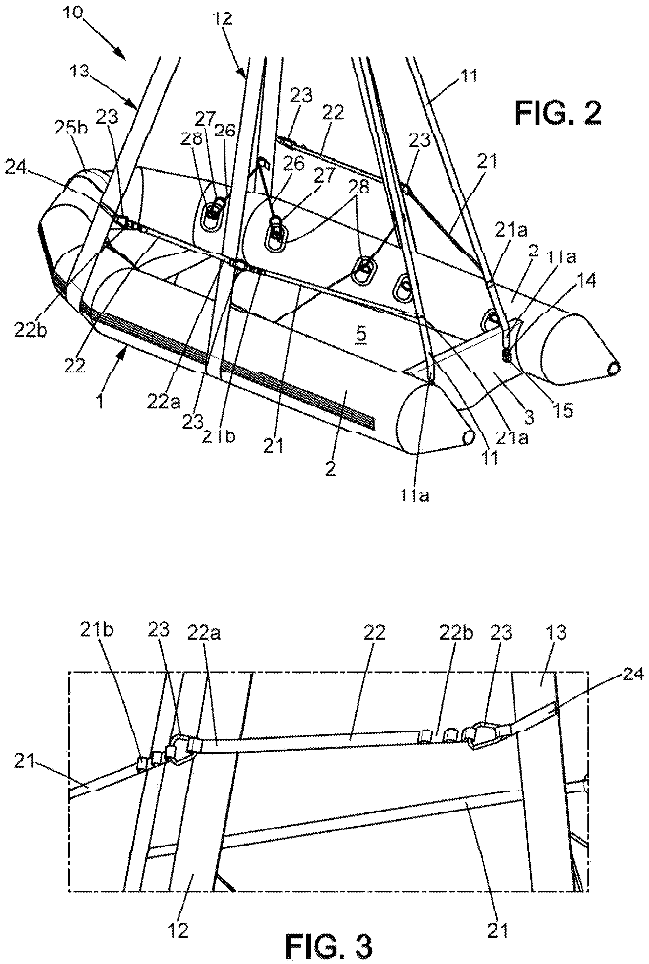

Le bateau pneumatique 1 représenté gonflé sur les figures 1 et 2 est d'une structure classique bien connue, et comprend deux flotteurs latéraux 2, comportant un boudin gonflable de forme générale cylindrique, un tableau arrière rigide 3, destiné à supporter au moins un moteur de propulsion, et solidarisé, transversalement par rapport aux flotteurs latéraux 2, aux parties arrière de ces flotteurs 2, entre ces derniers, au niveau de la poupe du bateau, les parties avant des flotteurs 2 se rapprochant l'une de l'autre vers l'axe central longitudinal du bateau et se rejoignant à l'avant du bateau pour former sa proue, une quille 4 reliant les parties inférieures des deux flotteurs latéraux 2 l'une à l'autre, et un fond 5 s'étendant entre les deux flotteurs 2.

Sur les figures 1 et 2, le bateau pneumatique 1 n'est pas représenté en configuration opérationnelle, afin de mieux laisser apparaître les positions relatives des parties constitutives du bateau 1 et des composants du dispositif de transport selon l'invention, qui comprend essentiellement une élingue 10 à quatre brins souples de support, dont une paire de brins 11 dit "arrière", un brin 12 dit "médian" et un brin 13 dit "avant".

Les deux brins arrière 11 sont identiques l'un à l'autre, en dimensions et en structure, et chacun d'eux est équipé, à une extrémité dite "inférieure" 11a, d'une manille 14 de fixation à l'un respectivement de deux points d'attache et de levage ménagés chacun sur l'une des deux parties latérales du tableau arrière 3, et matérialisés par une cadène 15 en saille sur la face arrière du tableau 3 (voir figure 2). Chaque brin arrière 11 est également accroché par son autre extrémité, dite "supérieure" 11b à un anneau souple 16, en textile, lui-même accroché à un anneau principal 17, rigide et de forme ovale, par exemple en acier inoxydable, compatible avec les crochets qui équipent les installations de treuillage des hélicoptères pour le transport à l'élingue sous hélicoptère.

Chacun des brins médian 12 et avant 13 forme une boucle en aller et retour entre deux extrémités dites "supérieures" respectivement 12a et 13a dont chacune est indirectement rattachée à l'organe d'accrochage principal dit "supérieur" que constitue l'anneau 17, par l'intermédiaire d'un autre anneau souple textile 18, pour les extrémités supérieures 13a du brin avant 13, et par l'intermédiaire d'un mousqueton 19 et d'un court brin de liaison 20 pour chacune des deux extrémités supérieures 12a du brin médian 12 (voir figure 1).

Les deux brins médian 12 et avant 13 en boucle peuvent ainsi passer autour des contours externes et inférieurs des deux flotteurs 2 et sous la quille 4 du bateau 1, pour supporter les parties avant et centrale de ce dernier, dont la partie inférieure est supportée par les deux brins arrière 11, toute la charge étant rapportée sur l'anneau principal et supérieur 17, destiné à coopérer avec un crochet sous hélicoptère, pour permettre le transport du bateau 1 en configuration opérationnelle par élingue sous hélicoptère, sa dépose en mer ainsi que son levage à partir de la mer et son transport suspendu à l'élingue 10 comme représenté sur les figures 1 et 2. Ainsi, le brin avant 13 entoure le bateau 1 au niveau de la proue du bateau, et le brin médian 12 entoure le bateau 1 au niveau de la partie centrale de ce dernier.

Si les deux brins arrière 11 peuvent chacun être réalisé sous la forme d'une sangle de largeur faible ou moyenne, par exemple de 50 à 70 mm de large, par contre les brins médian 12 et avant 13 en boucle sont constitués de sangles larges, d'une largeur supérieure à 100 mm, par exemple de 150 mm, afin que la pression de contact contre le bateau 1 ne soit pas dommageable, tout en assurant, avec toute sécurité, le support de la charge du bateau 1 en configuration opérationnelle, comme indiqué ci-dessus.

La longueur de chaque brin arrière 11 est fixe et très inférieure à la longueur fixe du brin avant 13 en boucle, elle-même voisine de la longueur du brin médian 12 en boucle, qui est de préférence ajustable. A titre d'exemple, pour un bateau de 4,70 m ou 5,30 m de long, chacun des deux brins arrière 11 peut avoir une longueur de 467 cm, le brin avant 13 être de 1180 cm, et le brin médian de 1173 cm de longueur, et ajustable de ± 150 cm.

L'écartement entre les brins avant 13 et médian 12 ainsi qu'entre le brin médian 12 et les brins arrière 11 est défini pour chaque bateau, de sorte que les masses reprises par chaque brin soient équivalentes. Pour maintenir les écartements appropriés, des liens souples anti-écartement sont installés entre les brins de support avant 13, médian 12 et arrière 11, de chaque côté du bateau 1.

Comme représenté sur les figures 1 et 2, et en détail sur la figure 3, de chaque côté du bateau 1, les liens souples anti-écartement comprennent un lien arrière 21, qui est solidaire par une extrémité arrière 21a du brin arrière 11 du côté correspondant, et son extrémité avant 21b, au niveau de laquelle ce lien arrière 21 est réglable en longueur, est liée par un mousqueton 23 à la partie d'extrémité arrière 22a, solidarisée au brin médian 12 du côté correspondant, du lien anti-écartement avant 22, lequel est, dans sa partie d'extrémité avant 22b par laquelle il est réglable en longueur, lui-même lié à un autre mousqueton détachable 23 retenu sur une languette textile 24 solidarisée contre la sangle plate du brin avant 13.

De plus, pour empêcher le rapprochement du brin avant 13 vers le brin médian 12, un brin inférieur frontal 25, également réalisé sous la forme d'une sangle plate et large, relie le brin avant 13, au niveau du milieu de la boucle formée par ce dernier, à l'avant du bateau 1. Plus précisément, ce brin inférieur frontal 25 s'étend, en position d'utilisation du dispositif, sur la partie avant de l'arête de la quille 4, et une extrémité dite "arrière" 25a de ce brin inférieur frontal 25 est solidarisée au milieu de la sangle du brin avant 13, et l'autre extrémité, supérieure et avant 25b du brin inférieur frontal 25 est fixée de manière détachable par un mousqueton sur un anneau attaché sur le nez du bateau 1, ce mousqueton détachable et l'anneau n'étant pas visibles sur les figures annexées.

Pour assurer un bon maintien des brins médian 12 et avant 13 dans les positions les plus appropriées par rapport respectivement à la partie centrale et à l'avant du bateau 1, il est en outre prévu, sur ces brins 12 et 13, des liens détachables de positionnement 26, schématiquement représentés sur les figures 1 et 2, et comprenant chacun un crochet ou mousqueton 27 et un élastique de rappel (sandow), dont l'extrémité du côté opposé au crochet ou mousqueton est solidaire du brin médian 12 ou du brin avant 13, dans une zone de ce brin qui est située à une faible distance au-dessus et à l'extérieur du flotteur latéral 2 du côté correspondant, lorsque l'élingue est en position d'utilisation, de sorte que le crochet ou mousqueton 27 du lien de positionnement 26 puisse s'accrocher sur un anneau 28 solidaire du boudin gonflable du flotteur latéral 2 correspondant, sur sa partie supérieure et interne. De préférence, deux liens de positionnement 26 peuvent être solidarisés sensiblement sur la même partie d'un brin 12 ou 13 et venir s'accrocher l'un à un anneau 28 vers l'avant et l'autre à un autre anneau 28 vers l'arrière sur le bateau 1, par rapport à la position appropriée du brin avant 13 ou du brin médian 12 par rapport au bateau 1.

Les points de levage du bateau 1 que constituent les deux cadènes 15 du tableau arrière 3 ainsi que les portions de sangle des brins avant 13 et médian 12 qui passent sous la quille 4 et les flotteurs 2 sont ainsi judicieusement distribués pour assurer un transport approprié du bateau 1 en configuration opérationnelle.

## Revendications

1. Dispositif de transport à l'élingue d'un bateau pneumatique (1) en configuration opérationnelle sous hélicoptère, le bateau pneumatique (1) étant du type général connu comprenant deux flotteurs (2) latéraux, dont chacun comprend au moins un boudin gonflable, et qui sont séparés l'un de l'autre, en partie arrière des flotteurs (2) latéraux, au niveau de la poupe du bateau, par un tableau arrière (3) rigide, apte à supporter au moins un moteur de propulsion, les deux flotteurs (2) se rapprochant l'un de l'autre vers l'avant, en direction de l'axe central longitudinal du bateau, au niveau de la proue du bateau, qui comprend également une quille (4) reliant les parties inférieures des deux flotteurs (2) latéraux et un fond (5) s'étendant entre les deux flotteurs (2) latéraux, le dispositif de transport comprenant une élingue (10) à quatre brins souples de support, dont une paire de brins (11) dont chacun est apte à être accroché par une extrémité dite "inférieure" (11a) à l'un respectivement de deux points de levage (15) et dont une extrémité dite "supérieure" (11b) de chacun desdits brins (11) est reliée à au moins un organe d'accrochage (17), apte à coopérer avec un crochet suspendu sous un hélicoptère, et deux brins (12, 13) souples de support, formant chacun une boucle apte à passer autour des contours externes et inférieurs latéraux et sous la quille (4) du bateau (1), et dont chacune des deux extrémités (12a, 13a) est attachée audit au moins un organe d'accrochage (17), l'un (13) des deux brins en boucle dit "avant" étant apte à entourer le bateau (1) au niveau de la proue de ce dernier, **caractérisé en ce que** l'autre brin (12) en boucle dit "médian", est apte à entourer le bateau (1) au niveau de la partie centrale du bateau, et **en ce que** lesdits brins (11) aptes à être reliés aux deux points de levage (15) sont des brins (11) arrière aptes chacun à être accroché à un point de levage ménagé dans l'une respectivement des deux parties d'extrémités latérales du tableau arrière (3), le dispositif comprenant de plus un brin inférieur frontal (25), qui relie la boucle du brin avant à l'avant du bateau, et est apte à empêcher le rapprochement dudit brin avant (13) vers le brin médian (12), ledit brin inférieur frontal (25) étant une sangle plate de nez, dont une extrémité dite "avant" (25b) est apte à être fixée de manière détachable à un point d'attache sur le nez du bateau (1), et dont l'autre extrémité dite "arrière" (25a) est solidaire du milieu du brin avant (13), et vient se positionner sensiblement au niveau de l'arête de la quille (4) en position d'utilisation du dispositif.

2. Dispositif de transport selon la revendication 1, **caractérisé en ce que** les brins "médian" (12) et "avant" (13) sont chacun une sangle large.

3. Dispositif de transport selon l'une quelconque des revendications 1 et 2, **caractérisé en ce que** ledit brin "médian" (12) est de longueur ajustable, le brin avant (13) et les deux brins arrière (11) étant de longueur fixe.

4. Dispositif de transport selon l'une quelconque des revendications 1 à 3, **caractérisé en ce qu'**il comprend de plus des liens souples anti-écartement (21, 22) entre les brins de support avant (13), médian (12) et arrière (11), de chaque côté du bateau (1).

5. Dispositif de transport selon la revendication 4, **caractérisé en ce que**, de chaque côté du bateau (1), les liens souples anti-écartement comprennent un lien arrière (21), reliant le brin arrière (11) du côté considéré au brin médian (12), et un lien avant (22), reliant le brin médian (12) au brin avant (13).

6. Dispositif de transport selon l'une quelconque des revendications 1 à 5, **caractérisé en ce que** ledit organe d'accrochage est un anneau rigide supérieur (17), par exemple en métal, apte à être accroché au crochet d'une installation de treuillage d'un hélicoptère.

7. Dispositif de transport selon l'une quelconque des revendications 1 à 6, **caractérisé en ce qu'**il comprend également au moins un lien détachable (26) de positionnement, comprenant un crochet ou mousqueton (27) et un élastique de rappel, dont une extrémité est solidaire d'une partie du brin avant (13) ou médian (12) venant à proximité et au-dessus d'un flotteur (2) latéral du bateau (1), en position d'utilisation, de sorte que le lien de positionnement (26) est apte à relier, de manière détachable, ledit brin avant (13) ou médian (12) à un anneau (28) de retenue sur ledit flotteur (2) du bateau (1) .

8. Dispositif de transport selon l'une quelconque des revendications 1 à 7, **caractérisé en ce qu'**il comprend de plus au moins deux liens (26) de positionnement détachables aptes à relier chacun le brin médian (12) ou avant (13), dont il est solidaire par une extrémité, à l'un respectivement de deux anneaux (28) de retenue sur un flotteur (2) latéral du bateau (1), dont l'un est vers l'avant et l'autre vers l'arrière du bateau (1) par rapport audit brin médian (12) ou avant (13), chacun des deux liens (26) de positionnement comportant un crochet ou mousqueton (27) et un élastique de rappel.

9. Ensemble comprenant un bateau pneumatique (1) du type comprenant deux flotteurs (2) latéraux, dont chacun comprend au moins un boudin gonflable, et qui sont séparés l'un de l'autre, en partie arrière des flotteurs (2) latéraux, au niveau de la poupe du bateau, par un tableau arrière (3) rigide, apte à supporter au moins un moteur de propulsion, les deux flotteurs (2) se rapprochant l'un de l'autre vers l'avant, en direction de l'axe central longitudinal du bateau, au niveau de la proue du bateau, qui comprend également une quille (4) reliant les parties inférieures des deux flotteurs (2) latéraux et un fond (5) s'étendant entre les deux flotteurs (2) latéraux, et un dispositif de transport à l'élingue dudit bateau pneumatique (1) en configuration opérationnelle, sous hélicoptère, **caractérisé en ce que** ledit dispositif de transport à l'élingue est selon l'une quelconque des revendications 1 à 8.

## Patentansprüche

1. Transportvorrichtung für den Transport per Anschlagmittel für ein Schlauchboot (1) in Betriebskonfiguration unter einem Hubschrauber, wobei das Schlauchboot (1) vom allgemeinen bekannten Typ ist, der zwei seitliche Schwimmkörper (2) umfasst, von denen jeder mindestens einen aufblasbaren Schlauch aufweist, und die am hinteren Teil der seitlichen Schwimmkörper (2) in Höhe des Hecks des Bootes durch einen starren Heckspiegel (3) voneinander getrennt sind, der dazu geeignet ist, mindestens einen Antriebsmotor zu tragen, wobei sich die beiden Schwimmkörper (2) in Richtung der Längsmittelachse des Bootes nach vorne aneinander annähern, auf Höhe des Bugs des Bootes, welches auch einen Kiel (4), der die unteren Teile der beiden seitlichen Schwimmkörper (2) verbindet, und einen Boden (5) umfasst, der sich zwischen den beiden seitlichen Schwimmkörpern (2) erstreckt,
wobei die Transportvorrichtung ein Anschlagmittel (10) mit vier flexiblen Tragsträngen umfasst, davon ein Paar von Strängen (11), von denen jeder dazu geeignet ist, an einem als "unteren" Ende (11a) bezeichneten Ende an jeweils einem von zwei Hebepunkten (15) eingehakt zu werden, und wobei ein als "oberes" Ende (11b) bezeichnetes Ende jedes der Stränge (11) mit mindestens einem Einhakorgan (17) verbunden ist, das dazu geeignet ist, mit einem unter einem Hubschrauber aufgehängten Haken zusammenzuwirken, und zwei flexible Tragstränge (12, 13), die jeweils eine Schlaufe bilden, die dazu geeignet ist, um die äußeren und unteren seitlichen Konturen herum und unter dem Kiel (4) des Bootes (1) hindurch geführt zu werden, und von denen jedes der beiden Enden (12a, 13a) jeweils an dem mindestens einem Einhakorgan (17) befestigt ist, wobei der eine (13) der beiden schlaufenförmigen Stränge, der als "vorderer" Strang bezeichnet wird, dazu geeignet ist, das Boot (1) auf Höhe des Buges desselben zu umgeben,
**dadurch gekennzeichnet, dass** der andere schlaufenförmige Strang (12), der als "mittlerer" Strang bezeichnet wird, dazu in der Lage ist, das Boot (1) auf Höhe des mittleren Teils des Bootes zu umgeben, und dass die Stränge (11), die dazu geeignet sind, mit den beiden Hebepunkten (15) verbunden zu werden, hintere Stränge (11) sind, die jeweils dazu geeignet sind, an einem Hebepunkt eingehakt zu werden, der jeweils in einem der beiden seitlichen Endteile des Heckspiegels (3) vorgesehen ist, wobei die Vorrichtung ferner einen unteren vorderen Strang (25) umfasst, der die Schlaufe des vorderen Strangs mit der Vorderseite des Bootes verbindet und dazu der Lage ist, die Annäherung des vorderen Strangs (13) an den mittleren Strang (12) zu verhindern, wobei der untere vordere Strang (25) ein flacher Nasen-Gurt ist, dessen eines Ende, das als "vorderes" Ende (25b) bezeichnet wird, dazu geeignet ist, lösbar an einem Befestigungspunkt an der Nase des Bootes (1) befestigt zu werden, und dessen anderes Ende, das als "hinteres" Ende (25a) bezeichnet wird, mit der Mitte des vorderen Stranges (13) fest verbunden ist und in der Gebrauchsstellung der Vorrichtung im Wesentlichen auf gleicher Höhe mit der Kante des Kiels (4) zu liegen kommt.

2. Transportvorrichtung nach Anspruch 1,
**dadurch gekennzeichnet, dass** der "mittlere" Strang (12) und der "vordere" Strang (13) jeweils ein breiter Gurt sind.

3. Transportvorrichtung nach einem der Ansprüche 1 und 2,
**dadurch gekennzeichnet, dass** der "mittlere" Strang (12) längenverstellbar ist, wobei der vordere Strang (13) und die beiden hinteren Stränge (11) eine feste Länge aufweisen.

4. Transportvorrichtung nach einem der Ansprüche 1 bis 3,
**dadurch gekennzeichnet, dass** sie außerdem flexible Spreizsicherung-Verbindungen (21, 22) zwischen den vorderen (13), mittleren (12) und hinteren (11) Tragsträngen auf jeder Seite des Bootes (1) umfasst.

5. Transportvorrichtung nach Anspruch 4,
**dadurch gekennzeichnet, dass** auf jeder Seite des Bootes (1) die flexiblen Spreizsicherung-Verbindungen ein hinteres Glied (21), das den hinteren Strang (11) auf der betreffenden Seite mit dem mittleren Strang (12) verbindet, und ein vorderes Glied (22) umfassen, das den mittleren Strang (12) mit dem vorderen Strang (13) verbindet.

6. Transportvorrichtung nach einem der Ansprüche 1 bis 5,
**dadurch gekennzeichnet, dass** das Einhakorgan ein oberer starrer Ring (17) ist, z.B. aus Metall, der dazu geeignet ist, an dem Haken einer Hubschrauber-Windenanlage eingehakt zu werden.

7. Transportvorrichtung nach einem der Ansprüche 1 bis 6,
**dadurch gekennzeichnet, dass** sie außerdem mindestens ein lösbares Positionierungsglied (26) umfasst, das einen Haken oder Karabinerhaken (27) und ein elastisches Rückholelement aufweist, dessen eines Ende mit einem Teil des vorderen (13) oder mittleren (12) Strangs fest verbunden ist, der in Gebrauchsstellung in der Nähe und oberhalb eines seitlichen Schwimmkörpers (2) des Bootes (1) zu liegen kommt, so dass das Positionierungsglied (26) dazu in der Lage ist, den vorderen (13) oder mittleren (12) Strang lösbar mit einem Haltering (28) an dem Schwimmkörper (2) des Bootes (1) zu verbinden.

8. Transportvorrichtung nach einem der Ansprüche 1 bis 7,
**dadurch gekennzeichnet, dass** sie außerdem mindestens zwei abnehmbare Positionierungsglieder (26) aufweist, die jeweils dazu geeignet sind, den mittleren (12) oder vorderen (13) Strang, mit dem sie an einem Ende fest verbunden sind, an jeweils einem von zwei Halteringen (28) an einem seitlichen Schwimmkörper (2) des Bootes (1) anzuschließen, von denen der eine in Bezug auf den mittleren (12) oder vorderen (13) Strang zum vorderen Teil und der andere zum hinteren Teil des Bootes (1) hin liegt, wobei jedes der beiden Positionierungsglieder (26) einen Haken oder Karabinerhaken (27) und ein elastisches Rückholelement aufweist.

9. Anordnung, umfassend ein Schlauchboot (1) vom Typ, der zwei seitliche Schwimmkörper (2) aufweist, von denen jeder mindestens einen aufblasbaren Schlauch aufweist, und die am hinteren Teil der seitlichen Schwimmkörper (2) in Höhe des Hecks des Bootes durch einen starren Heckspiegel (3) voneinander getrennt sind, der dazu geeignet ist, mindestens einen Antriebsmotor zu tragen, wobei sich die beiden Schwimmkörper (2) in Richtung der Längsmittelachse des Bootes nach vorne hin aneinander annähern, auf Höhe des Bugs des Bootes, welches auch einen Kiel (4), der die unteren Teile der beiden seitlichen Schwimmkörper (2) verbindet, und einen Boden (5) umfasst, der sich zwischen den beiden seitlichen Schwimmkörpern (2) erstreckt,
sowie eine Transportvorrichtung für den Transport per Anschlagmittel für das Schlauchboot (1) in Betriebskonfiguration unter einem Hubschrauber, **dadurch gekennzeichnet, dass** die Transportvorrichtung für den Transport per Anschlagmittel eine nach einem der Ansprüche 1 bis 8 ist.

## Claims

1. Device for transporting an inflatable boat (1) in operational configuration in a sling beneath a helicopter, the inflatable boat (1) being of the general known type comprising two lateral floats (2), each comprising at least one inflatable tube, and which are separated from one another at the rear portion of the lateral floats (2), at the stern of the boat, by a rigid transom (3) able to support at least one motor for propulsion, the two floats (2) converging towards one another at the front, towards the longitudinal central axis of the boat, at the bow of the boat, which also comprises a keel (4) connecting the lower portions of the two lateral floats (2) and a bottom (5) extending between the two lateral floats (2), the transport device comprising a sling (10) with four flexible support lines including a pair of lines (11) each of which can be attached by a so-called "lower" end (11a) to a respective one of two lifting points (15) and a so-called "upper" end (11b) of each of said lines (11) is connected to at least one attachment member (17), suitable for engaging with a hook suspended beneath a helicopter, and two flexible support lines (12, 13) each forming a loop to pass around the external and lower lateral contours and under the keel (4) of the boat (1), and of which each of the two ends (12a, 13a) is attached to said at least one attachment member (17), one (13) of the two looped lines, referred to as the "front" line, being able to surround the boat (1) at the bow of the boat, **characterized in that** the other looped line, referred to as the "middle" line (12), is able to surround the boat (1) at the central portion of the boat, and **in that** said lines (11) able to be connected to the two lifting points (15) are rear lines (11) each able to be attached to a lifting point arranged in one of the respective two lateral end portions of the transom (3), the device further comprising a forward lower line (25) which connects the loop of the front line to the front of the boat and is able to prevent said front line (13) from moving closer towards the middle line (12), said forward lower line (25) being a flat nose strap, of which a so-called "front" end (25b) can be detachably fixed to an attachment point on the nose of the boat (1), and of which the other so-called "back" end (25a) is integral with the middle of the front line (13) and is positioned substantially at the point of the keel (4) in the usage position of the device.

2. Transport device according to claim 1, wherein the "middle" (12) and "front" (13) lines are each a wide strap.

3. Transport device according to any one of claims 1 and 2, wherein said "middle" line (12) is of adjustable length, while the front line (13) and the two rear lines (11) are of fixed length.

4. Transport device according to any one of claims 1 to 3, further comprising flexible anti-separation connections (21, 22) between the front (13), middle (12), and rear (11) support lines, on each side of the boat (1).

5. Transport device according to claim 4, wherein, on each side of the boat (1), the flexible anti-separation connections comprise a rear connection (21) connecting the rear line (11) of the side concerned to the middle line (12), and a front connection (22) connecting the middle line (12) to the front line (13).

6. Transport device according to any one of claims 1 to 5, wherein said attachment member is a rigid upper ring (17), for example of metal, adapted for attachment to the hook of a cargo winch system of a helicopter.

7. Transport device according to any one of claims 1 to 6, further comprising at least one detachable positioning connection (26), comprising a hook or carabiner (27) and a bungee cord, of which one end is integral with a portion of the front (13) or middle (12) line in proximity to and above a lateral float (2) of the boat (1), in the usage position, such that the positioning connection (26) is able to detachably connect said front (13) or middle (12) line to a retaining ring (28) on said float (2) of the boat (1).

8. Transport device according to any one of claims 1 to 7, further comprising at least two detachable positioning connections (26), each able to connect the middle (12) or front (13) line, with which it is integral at one end, to one of two respective retaining rings (28) on a lateral float (2) of the boat (1), of which one is towards the front and the other towards the rear of the boat (1) relative to said middle (12) or front (13) line, each of the two positioning connections (26) comprising a hook or carabiner (27) and a bungee cord.

9. An assembly comprising an inflatable boat (1) of the type comprising two lateral floats (2), each comprising at least one inflatable tube, and which are separated from one another at the rear portion of the lateral floats (2), at the stern of the boat, by a rigid transom (3) able to support at least one motor for propulsion, the two floats (2) converging towards one another at the front, towards the longitudinal central axis of the boat, at the bow of the boat, which also comprises a keel (4) connecting the lower portions of the two lateral floats (2) and a bottom (5) extending between the two lateral floats (2), and a device for transporting said inflatable boat (1) in operational configuration in a sling beneath a helicopter, **characterized in that** said sling transport device is according to any one of claims 1 to 8.
